Europäisches Patentamt

European Patent Office

Office européen des brevets

(19)

(11) Veröffentlichungsnummer: **0 157 173**
**B1**

(12) **EUROPÄISCHE PATENTSCHRIFT**

(45) Veröffentlichungstag der Patentschrift: **25.07.90**

(51) Int. Cl.⁵: **E 04 B 1/66, E 04 D 5/14**

(21) Anmeldenummer: **85102151.9**

(22) Anmeldetag: **27.02.85**

(54) Verschweissbare Abdichtungsbahn.

(30) Priorität: **02.04.84 DE 3412271**

(43) Veröffentlichungstag der Anmeldung:
**09.10.85 Patentblatt 85/41**

(45) Bekanntmachung des Hinweises auf die
Patenterteilung:
**25.07.90 Patentblatt 90/30**

(84) Benannte Vertragsstaaten:
**AT BE CH DE FR GB IT LI NL SE**

(56) Entgegenhaltungen:
**DE-A-2 358 102**
**FR-A-2 215 511**
**FR-A-2 393 993**

(73) Patentinhaber: **Niederberg-Chemie GmbH**
**Postfach 11 63**
**D-4133 Neukirchen-Vluyn (DE)**

(72) Erfinder: **Schlütter, Aloys**
**Rheinstrasse 42**
**D-4152 Kempen 3 (DE)**

Courier Press, Leamington Spa, England.

EP 0 157 173 B1

## Beschreibung

Die Erfindung betrifft eine Abdichtung, bestehend aus mehreren nebeneinander überlappend verlegten, mit an den überlappenden Randstreifen verschweißten Abdichtungsbahnen, insbesondere äthylencopolymerhaltige, bituminöse Abdichtungsbahnen, mit einem Gemisch aus Polyäthylen-Acrylsäureester-Copolymerisat, Bitumen, Hochdruckpolyäthylen und Anthrazitstaub und einer Mehrfachschweißnaht.

Abdichtungsbahnen werden üblicherweise durch Extrudieren hergestellt. Je nach Anforderung beträgt die Dicke der Abdichtungsbahnen mehrere Millimeter. An der Oberseite und/oder Unterseite ist wahlweise eine Kaschierung vorgesehen. Als Ausgangsstoff kann statt eines ethylencopolymerhaltigen, bituminösen Gemisches beispielsweise auch PVC oder ein anderer Kunststoff verwendet werden.

Nach dem Extrudieren werden die Bahnen zu Rollen aufgewickelt, die vorzugsweise eine Breite zwischen 1 und 3 m aufweisen. Die Bahnen finden im Hoch-, Tief- und Tunnelbau Verwendung. Zur Herstellung einer Abdichtung werden die Bahnen aufgerollt, überlappend nebeneinandergelegt und an den überlappenden Randstreifen miteinander verschweißt.

Die Verschweißung wurde bisher, sofern sie prüffähig sein sollte, mit Doppelschweißnähten ausgeführt. Ein Schweißgerät verschweißt dazu in einem Arbeitsgang zwei parallele Schweißnähte. In der Mitte beider Schweißnähte bleibt ein unverschweißter Bereich. Dieser Bereich wird zur Kontrolle der Schweißnaht auf Festigkeit und Dichtigkeit benutzt, indem er mit Druckluft oder Druckwasser beaufschlagt wird. Kommt es bei dieser Überprüfung zu Fehlstellen, so können sie einmal an der vorderen Naht oder an der hinteren Naht auftreten.

Doppelnähte an Abdichtungsbahnen sind seit langem bekannt. Die Anmelderin und Wettbewerber arbeiten seit etwa zwei Jahrzehnten nach dem Verfahren. Abdichtungsbahnen mit Doppelnähten sind auch aus der FR-A-2 393 993 bekannt.

Seit Anfang an bestanden nach Einführung von Doppelnähten Schwierigkeiten, die sich aus mangelnder Reparaturfähigkeit der hinteren Schweißnaht einer Doppelnaht ergaben. Die mangelnde Reparaturfähigkeit von Doppelschweißnähten bildet vor allem bei Deponieabdichtungsbahnen auf Deponien eine erhebliche Erschwerung.

Bei der Anlegung von Deponien wird die Deponiebasis üblicherweise mit einer Kunststoffabdichtung versehen. Die Kunststoffabdichtung setzt sich aus einzelnen Abdichtungsbahnen zusammen, die überlappend verlegt werden und im Überlappungsbereich verschweißt werden. Die Schweißnähte erstrecken sich je nach Größe der Deponie über 50 m oder 100 m und mehr. Auch zuverlässige Schweißgeräte sind darauf angewiesen, daß der Überlappungsrand ein bestimmtes Maß einhält. Die Toleranzen sind dabei nicht allzu groß. Es kommt vor, daß das notwendige Überlappungsmaß fehlt. Daraus können sich Fehlerstellen ergeben. Solche Fehlerstellen können nicht durch Flicken überdeckt werden. Vielmehr wird in der Regel gefordert, daß der gesamte Überlappungsbereich herausgeschnitten wird. Mit dem Herausschneiden von Hand kompliziert sich der Schweißvorgang erheblich. Es kann zu neuen Schweißfehlern kommen. Im Ergebnis kann ein einzelner Schweißfehler leicht die Tagesarbeit einer Verlegerkolonne zunichte machen.

Neben den oben erläuterten Schweißfehlern aufgrund mangelnder Überlappung bzw. zu großer Überlappung von Abdichtungsbahnenrändern sind auch Fehler zu berücksichtigen, die von Betriebsstörungen des Gerätes oder aber auch durch Verschmutzung von Schweißflächen verursacht werden. Die Verschmutzung ist ein besonders gravierendes Problem, da das hier angesprochene Schweißen von Abdichtungsbahnen üblicherweise bei Bahnen stattfindet, die unmittelbar auf Erdreich bzw. Sand oder Bentonit oder dergleichen verlegt worden sind. Die sich aus der Verschmutzung ergebenden Probleme betreffen insbesondere die hintere Schweißnaht.

Der Erfindung liegt die Aufgabe zugrunde, bei Mehrfachschweißnähten die Schwierigkeiten mit der hinteren Schweißnaht zu beseitigen.

Nach der Erfindung wird das dadurch erreicht, daß entweder eine doppelte Schweißnaht vorgesehen ist, bei der die Breite der hinteren Schweißnaht das 1, 2- bis 2- fache der Breite der vorderen Schweißnaht beträgt oder eine Dreifachschweißnaht vorgesehen ist, bei der die Schweißnähte gleichen Abstand voneinander und gleiche Breite aufweisen.

In der Zeichnung sind zwei Ausführungsbeispiele der Erfindung dargestellt. Es zeigen:
Fig. 1 eine asymmetrische Schweißnaht,
Fig. 2 eine Dreifachnaht.

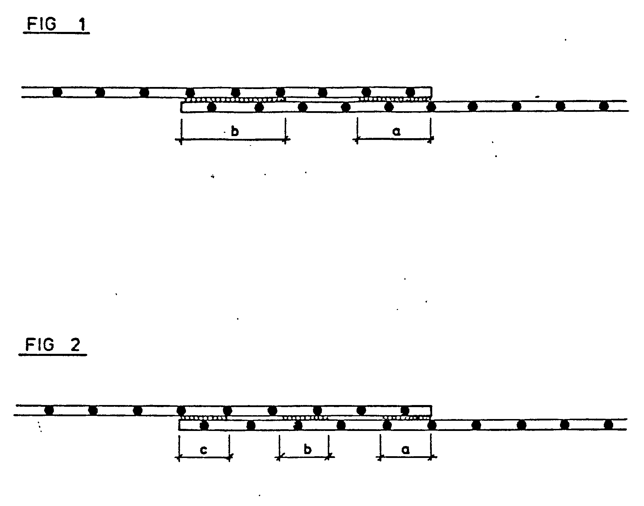

Nach der Fig. 1 sollen zwei Dichtungsbahnen 1 und 2 im Überlappungsbereich ineinander verschweißt werden. Die Dichtungsbahnen bestehen aus 45-50 Gew.% eines Gemisches aus Polyäthylen-Acrylsäureester-Copolymerisat und einem kleinen Anteil Bitumen, etwa 10-15 Gew.% Hochdruckpolyäthylen und etwa 40 Gew.% Anthrazitstaub mit einer Körnung bis zu 30 und einem Anteil an unbrennbaren Bestandteilen von bis zu 30 Gew.% (bezogen auf den Anthrazitstaubanteil).

In der Ansicht nach Fig. 1 sind die Abdichtungsbahnen 1 und 2 an der Unterseite zugänglich. Die Oberseite ist, z. B. beim Tunnelbau, unzugänglich. Aus diesem Grunde wird die zugängliche Schweißnaht der so gesehenen Doppelschweißnaht als vordere Schweißnaht bezeichnet. In Fig. 1 trägt die vordere Schweißnaht die Bezeichnung a. Die unzugängliche Schweißnaht ist die hintere Schweißnaht und trägt in Fig. 1 die Bezeichnung b. Die Schweißnaht a ist breiter als die Schweißnaht b. Die Schweißnahtbreite der hinteren Schweißnaht liegt zwischen dem 1,2 bis 2-fachen der Schweißnahtbreite a. Die größere hintere Schweißnahtbreite sichert eine ausreichende Abdichtung.

Nach Fig. 2 ist anstelle der asymmetrischen Doppelschweißnaht eine Dreifachnaht vorgesehen. Zugleich zeigt Fig. 2 den Anwendungsfall einer Dachabdichtungsbahn. In diesem Fall ist die Schweißnaht a von oben zugänglich, während die mittlere Schweißnaht b sowie die hintere Schweißnaht c nicht mehr zugänglich sind. Die Schweißnahtbreiten aller Schweißnähte a, b und c sind im Ausführungsbeispiel nach Fig. 2 gleich ausgeführt. Es variiert wahlweise der Abstand zwischen den Schweißnähten. Darüber hinaus kann auch die Schweißnahtbreite variieren.

## Patentanspruch

Abdichtung bestehend aus mehreren nebeneinander überlappend verlegten, mit an den überlappenden Randstreifen verschweißten Abdichtungsbahnen, insbesondere äthylencopolymerhaltige, bituminöse Abdichtungsbahnen, mit einem Gemisch aus Polyäthylen-Acrylsäureester-Copolymerisat, Bitumen, Hochdruckpolyäthylen und Anthrazitstaub und einer Mehrfachschweißnaht, dadurch gekennzeichnet, daß entweder eine doppelte Schweißnaht vorgesehen ist, bei der die Breite der hinteren Schweißnaht das 1,2- bis 2-fache der Breite der vorderen Schweißnaht beträgt oder eine Dreifachschweißnaht vorgesehen ist, bei der die Schweißnähte gleichen Abstand voneinander und gleiche Breite aufweisen.

## Revendication

Etanchéité constituée de plusieurs bandes d'étanchéité posées l'une à côté de l'autre à recouvrement et soudées sur les zones de bordure en recouvrement, en particulier bandes d'étanchéité bitumineuses contenant un copolymère d'éthylène, avec un mélange d'un copolymérisat polyéthylène-ester d'acide acrylique, de bitume, de polyéthylène haute densité et de poussière d'anthracite, et comportant un cordon de soudure multiple, caractérisée en ce que soit on prévoit un double cordon de soudure pour lequel la largeur du cordon de soudure arrière est de 1,2 à 2 fois supérieure à la largeur du cordon de soudure avant, soit on prévoit un triple cordon de soudure pour lequel les cordons de soudure sont à égale distance l'un de l'autre et présentent la même largeur.

## Claim

Impervious barrier, consisting of several sealing sheets, laid overlapping one another and sealed (welded) together at the overlapping edge strips, especially bituminous sealing sheets containing ethylene copolymer, comprising a mixture of polyethylene/acrylic acid ester copolymer, bitumen, high-pressure polyethylene and anthracite dust and with a multiple weld seam, characterized in that either a double weld seam is provided, in which the width of the rear weld seam is 1.2 to 2 times the width of the front weld seam, or a triple weld seam is provided, in which the weld seams are at equal distances from one another and have the same width.

EP 0 157 173 B1

FIG 1

FIG 2

1